(19) Europäisches Patentamt
European Patent Office
Office européen des brevets

(11) **EP 4 498 562 A1**

(12) **DEMANDE DE BREVET EUROPEEN**

(43) Date de publication:
**29.01.2025 Bulletin 2025/05**

(21) Numéro de dépôt: **23202444.8**

(22) Date de dépôt: **09.10.2023**

(51) Classification Internationale des Brevets (IPC):
**H02J 7/00** (2006.01)   **B60L 50/40** (2019.01)
**H02J 7/34** (2006.01)

(52) Classification Coopérative des Brevets (CPC):
**H02J 7/345; B60L 50/40; B60L 50/51; B60L 58/12;**
**H02J 7/0071;** B60L 2200/26; B60L 2200/32;
B60L 2200/36; H02J 2207/20; H02J 2310/40

(84) Etats contractants désignés:
**AL AT BE BG CH CY CZ DE DK EE ES FI FR GB
GR HR HU IE IS IT LI LT LU LV MC ME MK MT NL
NO PL PT RO RS SE SI SK SM TR**
Etats d'extension désignés:
**BA**
Etats de validation désignés:
**KH MA MD TN**

(30) Priorité: **24.07.2023 FR 2307962**

(71) Demandeurs:
• **Université de Strasbourg
67081 Strasbourg cedex (FR)**
• **Centre National de la Recherche Scientifique
75016 Paris (FR)**

• **Institut National Des Sciences
Appliquees
67000 Strasbourg (FR)**

(72) Inventeurs:
• **PAUL, Théophile
67760 Gambsheim (FR)**
• **MESBAHI, Tedjani
67200 Strasbourg (FR)**

(74) Mandataire: **Vidon Brevets & Stratégie
16B, rue de Jouanet
BP 90333
35703 Rennes Cedex 7 (FR)**

(54) **PROCÉDÉ DE GESTION D'ÉNERGIE DE DISPOSITIFS HYBRIDES DE STOCKAGE D'ÉNERGIE**

(57) La présente invention concerne un procédé de gestion d'énergie d'un dispositif hybride de stockage d'énergie dans un système stationnaire ou mobile, pour en permettre un dimensionnement optimal, le dispositif hybride de stockage d'énergie comprenant au moins une source d'énergie principale telle qu'une batterie, au moins une source d'énergie auxiliaire telle qu'un super condensateur, et au moins un convertisseur,

**EP 4 498 562 A1**

Fig. 2

## Description

### Domaine technique de l'invention

Le domaine de l'invention est celui des algorithmes de gestion d'énergie pour des dispositifs de stockage d'énergie et s'inscrit dans le cadre de l'amélioration du dimensionnement, des performances et de la durée de vie de tels dispositifs. Il s'agit plus particulièrement d'algorithmes de stratégie de gestion d'énergie (connu usuellement sous les termes anglais « *Energy Management Strategy* » et désignés par l'acronyme anglais EMS), ces algorithmes étant destinés à la gestion d'énergie de systèmes de stockage de type batterie Li-ion/supercondensateur (SC).

### Arrière-plan technique

Dans tout problème d'ingénierie, le dimensionnement est crucial dans la conception d'un produit. Il permet de définir et d'estimer les dimensions, le volume, la masse, le coût d'un objet ou tout autres caractéristiques techniques en fonction d'un cahier des charges. Ce dernier permettra de fixer le ou les points de fonctionnement, ainsi que les contraintes du système. Ainsi, à partir d'un certain nombre de calculs plus ou moins complexes, une estimation plus ou moins précise peut être donnée quant aux dimensions des matériaux ou au nombre de composants qui doivent être utilisés. Cette étape de dimensionnement est primordiale car elle permet d'avoir une méthodologie lors de la conception d'un objet, permettant ainsi un gain de temps et d'argent important. Habituellement, le dimensionnement est couplé avec la modélisation. Cette dernière permet de recréer numériquement l'objet en fonction du dimensionnement réalisé et d'en vérifier son fonctionnement. De légers ajustements peuvent alors être apportés à la modélisation pour corriger les différentes divergences.

Dans le cas d'un dispositif hybride de stockage d'énergie avec au moins une source principale d'énergie et au moins une source auxiliaire d'énergie, et en particulier une source hybride de type batterie Li-ion/supercondensateurs à architecture semi-active du côté des supercondensateurs, ce sont la batterie, les supercondensateurs ainsi que le convertisseur (qui est un convertisseur de puissance) qui doivent être dimensionnés.

Dans la suite du texte, les supercondensateurs seront désignés par l'acronyme SC usuellement utilisé dans ce domaine technique.

Dans la littérature scientifique, on retrouve différentes méthodes de dimensionnement. Ainsi, Araujo[1] propose par exemple un algorithme d'optimisation couplé à la gestion d'énergie afin de déterminer le nombre de cellules de batterie et de SC. Une stratégie de gestion d'énergie (désignée par l'acronyme SGE) à base de règles (stratégie selon une méthode fréquentielle), ainsi qu'un problème d'optimisation sont utilisés. Cependant, en plus d'être dédiée à une architecture active, cette méthode ne prend pas en compte le caractère temps réel de la SGE pour la méthode à base d'optimisation. Zhang[2] utilise les transformées en ondelettes (connues en anglais par les termes« *Wavelett transform* ») dans son dimensionnement afin de définir le partage de puissance. Il prend alors en considération la masse, le coût et l'état de santé de la batterie (« *State of Health -SOH*») comme objectifs dans son algorithme de dimensionnement. Pour converger, un algorithme génétique (NSGA-II) est employé. Gonzalez[3] prend en compte la dégradation de la batterie afin de dimensionner les dispositifs de stockage d'énergie de la source hybride. Ostadi[4] utilise un algorithme d'optimisation par essaim particulaire (usuellement désigné par l'acronyme PSO) afin de déterminer le nombre de cellules de batterie et de SC. Dans cette étude, seul le prix de la source hybride est la variable à minimiser. Herrera[5] adoptera également cette même idée et appliquera son dimensionnement pour un tramway, avec une architecture un peu plus complexe comprenant deux unités de convertisseur, couplées toutes les deux à un module de supercondensateur. Xiong[6] fait usage de la programmation dynamique pour la stratégie de contrôle et utilise une deuxième boucle d'optimisation à base de PSO pour déterminer les paramètres de son algorithme de programmation dynamique. Trieste[7] présente une étude de dimensionnement d'un convertisseur boost entrelacé à trois bras, ainsi que des supercondensateurs associés. Néanmoins, on ne retrouve pas d'information relative au dimensionnement de la batterie dans son étude.

Les dimensionnements présentés ci-dessus reposent généralement sur des problèmes d'optimisation couplés à une gestion d'énergie. En effet, il est impensable de dissocier les deux, tant l'efficacité d'une SGE influe sur les performances d'une source hybride. Or, afin de respecter le caractère temps réel de la SGE et l'aspect système embarqué, il est nécessaire que l'algorithme en question soit adapté : ce qui n'est pas le cas de la programmation dynamique (PD) par exemple. On remarquera également que dans la plupart des travaux existants, aucune information concernant le dimensionnement du convertisseur n'est mentionnée. De plus, le dimensionnement cible le plus souvent des architectures actives.

### Résumé de l'invention

Afin de résoudre les problèmes et inconvénients de l'art antérieur, les demandeurs ont mis au point un procédé de gestion d'énergie d'un dispositif hybride de stockage d'énergie (ou également désigné par les termes source hybride dans la suite du texte) dans un système stationnaire ou mobile, pour en permettre un dimensionnement optimal, ledit dispositif hybride de stockage d'énergie comprenant au moins une source d'énergie principale, au moins une source d'énergie auxiliaire, et au moins un convertisseur, ledit procédé comprenant les étapes suivantes :

- A) une première étape de dimensionnement comprenant :

   A1) l'acquisition des paramètres d'entrée suivants : cycles de puissance dudit système (en particulier des cycles de vitesse et dynamique si le système est un véhicule), et la technologie des sources d'énergie principale et auxiliaire dudit dispositif hybride de stockage d'énergie, puis
   A2) la mise en place d'une stratégie de gestion de l'énergie à l'aide d'une première commande prédictive MPC1 pour obtenir les données de sortie suivantes : les données de dimensionnement de ladite source d'énergie principale et de ladite source d'énergie auxiliaire nécessaires et des informations relatives audit au moins un convertisseur (et en particulier un convertisseur de puissance) ;

- B) une deuxième étape de test en simulation de la cohérence des données de sortie obtenues à l'étape A) comprenant les sous-étapes suivantes :

   B1) modélisation d'une part de ladite source d'énergie principale et d'autre part de ladite source d'énergie auxiliaire ainsi que dudit au moins un convertisseur de puissance servant d'interface entre lesdites sources d'énergie principale et auxiliaire;
   B2) pilotage dudit dispositif hybride de stockage d'énergie à l'aide d'un algorithme comprenant une boucle de gestion d'énergie constituée d'une deuxième commande prédictive MPC2 non linéaire (désignée par l'acronyme NMPC2).

Par convertisseur, on entend, au sens de la présente invention, un convertisseur de puissance. Si les performances attendues ne sont pas atteintes, les données de dimensionnement des sources d'énergie obtenues à l'étape A (par exemple, le nombre de cellule de batterie et/ou de supercondensateur pour un dispositif hybride batterie Li-ion/SC) sont ajustées pour ensuite passer à la dernière étape, après adaptation de l'algorithme de l'étape B2.

En ce qui concerne la première étape A) de dimensionnement et plus particulièrement la sous-étape A1) d'acquisition des paramètres d'entrée, on entend, au sens de la présente invention, par technologie des différentes sources d'énergie du dispositif hybride de stockage d'énergie, la chimie (par exemple dans le cas d'une batterie) et/ou la typologie des sources d'énergie (par exemple dans le cas d'un super condensateur SC) : on pourra notamment citer la tension, la capacité et la résistance de chacune des sources d'énergie.

En ce qui concerne la première étape A) de dimensionnement, et plus particulièrement la sous-étape A2) de mise en place d'une stratégie de gestion de l'énergie, on entend, au sens de la présente invention, par données de dimensionnement des sources d'énergie principale et auxiliaire, des données telles que la tension, la capacité, la puissance des différentes sources d'énergie.

Dans le cas d'un dispositif hybride de type batterie li-ion/ supercondensateur (ou SC), les données de dimensionnement de ladite première source d'énergie (11) et de ladite source d'énergie auxiliaire comprendraient notamment les nombre de cellules de la batterie et du SC De manière avantageuse, l'algorithme de l'étape B2 est séparé en deux parties comprenant :

- une première partie consistant en une boucle interne pour piloter la puissance de la source auxiliaire d'énergie, et
- une deuxième partie consistant en une boucle externe constituée de ladite commande prédictive NMPC2 (différente de la première commande prédictive MPC1).

De manière préférée, la boucle externe peut être calibrée (usuellement on utilise en anglais le terme « *tuned* »), afin d'optimiser les performances de la source hybride.

De manière avantageuse, le procédé selon l'invention peut en outre comprendre une troisième étape optionnelle C de test de l'algorithme de l'étape B2) sur un système réel. Pour cette troisième étape optionnelle C, la partie relative au matériel informatique (« *hardware* ») utilisable pour la mise en place de l'algorithme est choisie en fonction de l'étape B.

De manière avantageuse, chacune des sources d'énergie principale et auxiliaire peut être choisie dans le groupe constitué des sources d'énergie suivantes : batteries (notamment les, batteries Li-ion, les batteries sodium, les batteries Li-air et les batteries Li-solide), les piles à combustible, supercondensateurs et volants d'inertie.

De préférence, la source d'énergie principale peut être une batterie, et de préférence une batterie choisie dans le groupe constitué des batteries Li-ion, batteries sodium, batteries Li-air et des batteries Li-solide.

De manière davantage préférée, la source d'énergie principale peut être une batterie Li-ion et la source d'énergie auxiliaire un supercondensateur.

De manière avantageuse, des itérations successives peuvent être réalisées entre les étapes A) et B) et, le cas échéant entre les étapes B) et C), lorsque le procédé selon l'invention comprend l'étape optionnelle C.

Le procédé selon l'invention peut être utilisé dans une application telle que la mobilité électrique.

Par mobilité électrique, on entend, au sens de la présente invention les systèmes de transport de personnes ou de marchandises (routier, aérien, maritime, ferroviaire) mais aussi des systèmes électriques embarqués (par exemple des nacelles élévatrices, des bennes de camions poubelles, échelles de véhicules de secours etc.), qui peuvent être embarqués sur des systèmes de transports électriques ou non.

Le procédé selon l'invention peut également être utilisé dans le domaine des applications stationnaires comme le photovoltaïque et l'éolien, pour la gestion d'énergie d'un dispositif hybride de stockage d'énergie (1) dans un système stationnaire.

D'autres avantages et particularités de la présente invention résulteront de la description qui va suivre, donnée à titre d'exemple non limitatif et faite en référence aux figures et aux exemples.

**Brève description des figures**

[Fig. 1] - la figure 1 est une représentation schématique de la mise en place d'une stratégie de gestion d'énergie de type EMS pour « *Energy Management Strategy* ») connue de l'homme de l'art ;

[Fig. 2] - la figure 2 est une représentation schématique de la mise en place d'une stratégie de gestion d'énergie selon le procédé selon l'invention dans le cas d'un exemple particulier de dispositif hybride de stockage de type batterie Li-ion / supercondensateur.

[Fig. 3] - la figure 3 comprend deux schémas représentant respectivement les modèles utilisés pour la commande prédictive NMPC2 de la batterie 11 et des supercondensateurs 12, dans lesquels la batterie est considérée comme une source de tension en série avec une résistance (partie gauche de la figure 3) et les supercondensateurs sont représentés par un condensateur en série avec une résistance (partie droite de la figure 3) ;

[Fig. 4] - la figure 4 est un schéma de principe de l'algorithme de la sous-étape B2) selon la commande prédictive NMPC2 non linéaire ;

[Fig.5] - la figure 5 est un schéma de principe de la commande de la source hybride.

**Description détaillée des figures**

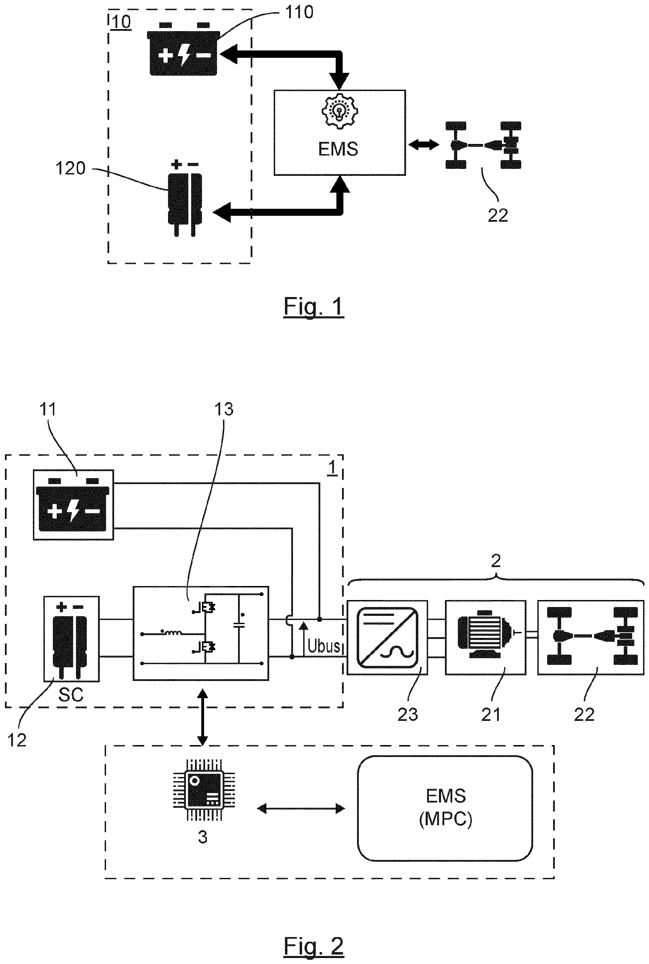

La figure 1 représente schématiquement mise en place d'une stratégie de gestion d'énergie de type EMS pour « *Energy Management Strategy* ») connue de l'homme de l'art. Pour améliorer les performances des batteries, leur durée de vie ainsi que leur dimensionnement, il est connu d'associer une batterie Li-ion Haute énergie 110 avec un supercondensateur (SC) 120, pour obtenir en particulier un dispositif de stockage d'énergie 10 avec une grande énergie spécifique et donc une grande autonomie, et une puissance spécifique élevée et donc une dynamique élevée. L'un possède une énergie spécifique élevée (grande autonomie) alors que l'autre possède une puissance spécifique élevée (dynamique élevée). Les deux sources d'énergie 110, 111 doivent être connectées ensemble *via* un ou plusieurs convertisseurs de puissance (non représentés sur la figure 1) afin de permettre un partage de puissance actif entre la batterie 110 et les supercondensateurs 111. Le dispositif hybride de stockage d'énergie 10 représenté sur la figure 1 alimente un propulseur 22.

La figure 2 est une représentation schématique de la mise en place d'une stratégie de gestion d'énergie selon le procédé selon l'invention dans le cas d'un dispositif hybride de stockage d'énergie 1 de type batterie Li-ion 11/ supercondensateur 12 avec un convertisseur 13.

Dans le cas particulier illustré sur la figure 2, le dispositif hybride de stockage d'énergie 1, qui est embarqué dans un dispositif mobile 2, comporte à titre de source d'énergie principale une batterie Li-ion 11 et un supercondensateur 12 à titre de source d'énergie auxiliaire et un convertisseur de puissance 13 interagissant avec un microprocesseur 3 sur lequel est embarqué un algorithme EMS à base d'optimisation, à base de MPC (« Model Predictive Control »).

Le dispositif hybride de stockage d'énergie 1 alimente un système 2 comprenant (dans le cas particulier illustré sur la figure 2) un moteur électrique 21, un propulseur 22 et un onduleur 23, ce système 2 alimenté par le dispositif hybride 1 constituant la charge auquel le dispositif hybride 1 va devoir fournir de la puissance pour fonctionner.

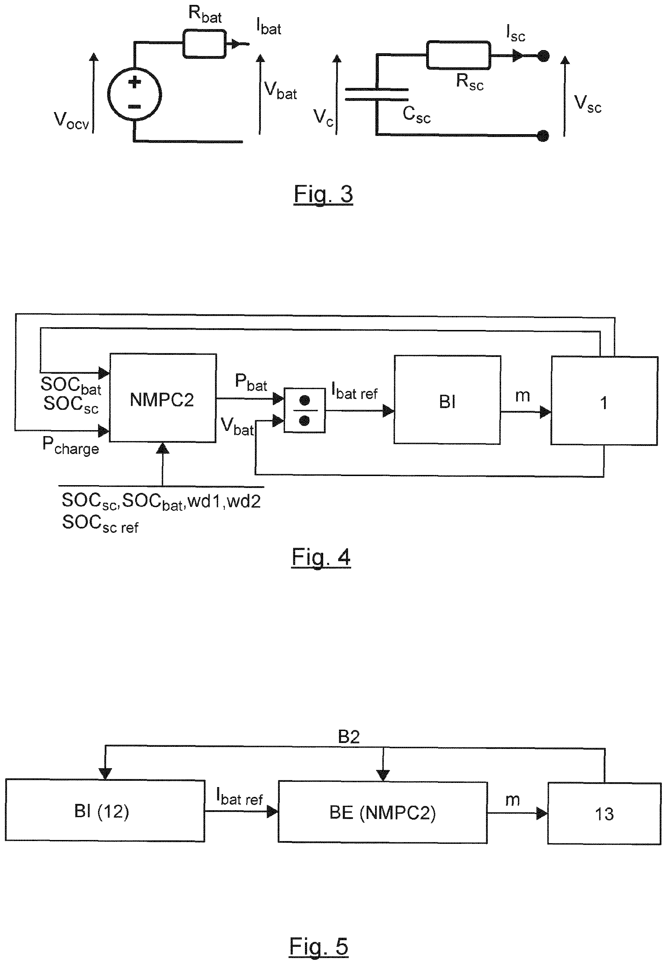

Les figures 3 à 5, relatives respectivement à la deuxième commande prédictive NMPC2 (figure 4) et aux modèles utilisés pour NMPC2 (figure 3) et à un schéma de principe de la commande de la source hybride 1, sont commentés en relation avec le procédé selon l'invention. Celui-ci comprend les étapes suivantes :

- A) une première étape de dimensionnement comprenant :

    A1) l'acquisition des paramètres d'entrée suivants : le nombre de cellules de batterie 11 et de supercondensateur 12 nécessaires et des informations relatives au convertisseur de puissance 13, et la technologie de la batterie 11 et du supercondensateur 12 ;

A2) la mise en place d'une stratégie de gestion de l'énergie à l'aide d'une première commande prédictive MPC1 pour obtenir les données de sortie suivantes : les données de dimensionnement de la batterie 11 et du supercondensateur 12 nécessaires (nombre de cellules) et des informations relatives au convertisseur 13 ;

- B) une deuxième étape de test en simulation de la cohérence des données de sorties obtenues à l'étape A) comprenant les sous-étapes suivantes :

B1) modélisation d'une part de la batterie 11 et d'autre part du supercondensateur 12 ainsi que du convertisseur de puissance 13 servant d'interface entre la batterie 11 et le supercondensateur 12 ;

B2) pilotage dudit dispositif hybride de stockage d'énergie 1 à l'aide d'un algorithme comprenant une boucle de gestion d'énergie constituée d'un deuxième commande prédictive NMPC2 non-linéaire.

## Première étape A de dimensionnement

### Acquisition A1) des paramètres d'entrée

Les cycles de puissances peuvent provenir de mesures réalisées sur le système cible à dimensionner, ou bien ils peuvent provenir des cycles de vitesse mesurés ou normalisés. A partir des cycles de vitesse et du modèle du système dynamique, il est possible d'estimer les différents cycles de puissance du système. Les différentes données des dispositifs de stockage d'énergie sont récupérées à partir des datasheets des différents composants. Ils peuvent être choisis de manière arbitraire ou défini selon un cahier des charges.

### Stratégie A2) de gestion de l'énergie

En ce qui concerne la mise en place d'une stratégie de gestion de l'énergie (étape A2) à l'aide d'une première commande prédictive MPC1, celle-ci se base sur un modèle simple pour résoudre le problème d'optimisation. Dans le cadre de la présente invention, on utilise un modèle décrit ci-après où l'énergie n'est rien d'autre que l'intégrale de la puissance. Un signe moins est ajouté aux équations (1) et (2) afin de simuler le comportement d'un dispositif de stockage d'énergie : l'énergie débitée réduit la capacité du dispositif de stockage d'énergie 1. Dans la commande finale de ce modèle, on agit indirectement sur la batterie 11 pour piloter le dispositif hybride de stockage d'énergie selon l'invention 1.

Par conséquent, la puissance de la batterie $P_{bat}$ est la variable de commande.

On cherche ensuite à exprimer la puissance $P_{sc}$ dudit supercondensateur 12 (également désignés par l'acronyme SC), en fonction de la variable de commande et de $P_v$ qui est la puissance demandée par la charge, qui est considérée ici comme une variable de perturbation.

On note $t_m$, la durée totale de la mission.

$$E_{bat} = \int_0^{t_m} -P_{bat}\, dt \tag{1}$$

$$E_{sc} = \int_0^{t_m} -P_{sc}\, dt \tag{2}$$

$$P_v = P_{sc} + P_{bat} \tag{3}$$

$$\begin{bmatrix} E_{bat}^{'} \\ E_{sc}^{'} \end{bmatrix} = \begin{bmatrix} -P_{bat} \\ -(P_v - P_{bat}) \end{bmatrix} \tag{4}$$

On cherche ensuite à minimiser une fonction coût (ci-après désignée par J), afin de permettre au supercondensateur 12 (ou SC) de se recharger à une énergie de référence d'une part, et de pénaliser la commande $P_{bat}$, ce qui se traduit par l'équation coût suivantes (équation (5)) :

$$J = min \sum_{i=1}^{N_p} \left[ w_{d1}(Esc(k+i|k) - Esc_{ref})^2 + w_{d2}(P_{bat}(k+i|k))^2 \right] \tag{5}$$

Les contraintes sont les suivantes :

$$Pb_{min} > P_{bat} > Pb_{max} \tag{6}$$

avec :

- J définissant la fonction coût,
- $N_p$ définissant l'horizon de prédiction,
- wai et waz définissant les poids de la fonction coût J,
- Esc définissant l'énergie des SC 12,
- Escref définissant l'énergie de référence des SC 12, c'est-à-dire l'énergie à laquelle les SC doivent se recharger une fois qu'ils ont fourni ou absorbé de l'énergie ; le rôle des SC est d'agir comme des buffers et doivent toujours être en mesure de fournir et/ou absorber du courant ;
- (k+ilk) correspond à la valeur prédite de la variable à l'instant k + i, basée sur l'information à l'instant k,
- $P_{bmin}$ et $P_{bmax}$, les limites minimales et maximales de la puissance de la batterie 11.

Les variables wai et waz sont utilisées afin de régler la fonction coût J en choisissant de mettre l'accent sur un terme plutôt qu'un autre. Étant donnés les ordres de grandeurs différents entre l'énergie des SC 12 et la puissance de la batterie 11, c'est à dire Esc et Pbat, il est nécessaire de normaliser la fonction coût J grâce aux poids wai et waz.

On fait le choix de normaliser la fonction coût J autour de 1, de manière que :

$$w_{d1} = \frac{w_{d1b}}{E_{v\ tot}^2} \tag{7}$$

avec :

$$w_{d2} = \frac{w_{d2b}}{P_{v\ max}^2} \tag{8}$$

- Pv max définissant la puissance maximale demandée par la charge correspondant au système alimenté par la source hybride (et désignée dans la suite de la description par la charge) : la charge est commandée et la source hybride va devoir fournir de la puissance pour faire fonctionner la charge
- Ev tot définissant l'énergie totale demandée par la charge, et
- wd1 et wd2 définissant les poids de la fonction coût J.

N'ayant pas de contraintes spécifiques au niveau du dimensionnement, les limites de puissance de la batterie 11 sont restées libres. Elles seront néanmoins prises en considération lors de la simulation et de l'implémentation sur le système. Enfin, la fréquence d'échantillonnage (Fe) est fixée à 0,5Hz et $N_p = N_c = 20$ (avec Np désignant l'horizon de prédiction et Nc désignant l'horizon de contrôle). L'horizon de contrôle sera le même que l'horizon de prédiction. Le temps de prédiction sera donc de 10 secondes étant donné que les phases d'accélération sont généralement courtes (autour de la dizaine de secondes). De plus, l'acquisition de mesures sur les systèmes embarqués est généralement de l'ordre de la seconde. Il ne faut pas que la fréquence d'échantillonnage Fe soit trop faible de peur d'avoir une valeur de $N_p$ trop élevée et ainsi de rencontrer un problème d'optimisation trop complexe à résoudre. Quant à la demande de puissance de la charge, elle est considérée comme constante dans le futur lors de la résolution du problème d'optimisation (la demande de puissance n'est pas connue à l'avance). Ainsi, si à l'instant k, on mesure une puissance de 10kW, cette dernière sera considérée constante de k à k + Np, lors de la prédiction et de la résolution de la fonction coût J.

**Deuxième étape B) de simulation de la cohérence données de sorties de l'étape A)**

Modélisation B1) de la source hybride (batterie 11 et SC 12)

Dans le cadre de la modélisation la source hybride, plusieurs éléments doivent être pris en compte. Le but principal de cette étape est de confirmer le dimensionnement de la source hybride et d'attester si ce dernier est véritablement fonctionnel.

On cherche à valider le fonctionnement énergétique du système sur un ou plusieurs cycles de vitesse et de puissance. Ainsi, la précision des équations mathématiques est un facteur déterminant sur le choix du modèle de chaque élément de la source hybride. Cependant, les constantes de temps sont disparates au sein même de la source hybride :

- pour le convertisseur : de l'ordre de la microseconde,
- pour le supercondensateur : de l'ordre de la seconde,
- pour la batterie : de l'ordre de la minute,

En outre, le temps d'observation du cycle de vitesse ou de puissance (de la vingtaine de minutes à plusieurs heures).

Un arbitrage doit donc être fait entre la précision des résultats et le temps de calcul de la simulation.

Par conséquent, la modélisation de la source hybride a été orientée vers un modèle énergétique du système, dans lequel on évalue davantage les transferts de puissance sur des échelles de temps longues (dizaine de minutes à quelques heures) plutôt que les comportements physiques à l'échelle du convertisseur (microseconde).

De plus, la modélisation de la source hybride est orientée vers de la commande pour traduire au mieux le comportement de la source hybride sans compromettre la vitesse de calcul des stratégies de gestion d'énergie (SGE), notamment celles à base d'optimisation qui sont gourmandes en calculs.

Pilotage B2) dudit dispositif hybride de stockage d'énergie 1

L'étape B2 de pilotage dudit dispositif hybride de stockage d'énergie 1 est réalisée à l'aide d'un algorithme comprenant une boucle de gestion d'énergie constituée d'un deuxième commande prédictive NMPC2 non-linéaire. En effet, en raison des différentes non-linéarités de l'ensemble du dispositif de stockage d'énergie 1 (convertisseur, batterie), une simple linéarisation autour d'un point de fonctionnement ne permettrait pas d'avoir les meilleurs résultats. De plus, l'algorithme utilisé permettra de prendre en compte la chute de tension de la batterie et des SC, liée à leur résistance interne. L'étude de Golchoubian[9] décrit une comparaison entre un MPC linéarisé et un NMPC et démontre l'intérêt de ce dernier (moins de sollicitations de la batterie). Cette étude considère la batterie comme une source de tension en série avec une résistance et les supercondensateurs sont représentés par un condensateur en série avec une résistance (Figure 3). Les états du modèle sont l'état de charge de la batterie ($SOC_{bat}$) et l'état de charge des supercondensateurs ($SOC_{sc}$). Le SOC des SC est défini linéairement à partir de la tension alors que celui de la batterie résulte de la méthode de comptage de Coulomb. Ils sont définis comme suit :

$$SOC_{sc} = \frac{V_c}{V_{sc\ max}}$$

(9)

$$SOC_{bat} = SOC_{bat\ init} - \frac{1}{C_{bat}} * \int_0^t I_{bat}\ dt$$

(10)

avec

- $SOC_{sc}$ désignant l'état de charge du ou des SC 12
- $SOC_{bat}$ désignant l'état de charge de la batterie 11,
- $SOC_{bat\ init}$ désignant l'état de charge initial de la batterie 11,
- $I_{bat}$ désignant le courant de la batterie 11,
- Vc désignant à la tension à vide des SC, ce qui correspond à la tension en tout temps aux bornes du condensateur Csc (cf. figure 3),
- Vsc désignant la tension aux bornes des SC 12 (cf. figure 3),

Les états de charge de la batterie 11 et des SC 12 sont définis entre 0 et 1. On veillera à exprimer $C_{bat}$ en *As* (Ampères secondes). On en déduit alors :

$$\dot{SOC}_{bat} = -\frac{I_{bat}}{C_{bat}} \qquad (11)$$

En négligeant les pertes, les puissances du dispositif hybride de stockage d'énergie 1sont exprimées comme suit :

$$P_{charge} = P_{sc} + P_{bat} \qquad (12)$$

avec =

- $P_{charge}$ désignant la puissance demandée par la charge
- $P_{sc}$ désignant la puissance du ou des SC 12,
- $P_{bat}$ désignant la puissance de la batterie 11,

On cherche ensuite à définir la puissance $P_{sc}$ du ou des SC 12 et la puissance $P_{bat}$ de la batterie 11 en fonction de leurs tensions et de leurs courant respectifs :

Pour les supercondensateurs 12

$$P_{sc} = I_{sc} * V_{sc} \qquad (13)$$

$$V_{sc} = V_c - R_{sc} * I_{sc} \qquad (14)$$

$$\dot{V}_c = -\frac{I_{sc}}{C_{sc}} \qquad (15)$$

Pour la batterie 11

$$P_{bat} = I_{bat} * V_{bat} \qquad (16)$$

$$V_{bat} = V_{ocv} - R_{bat} * I_{bat} \qquad (17)$$

avec :

- $I_{bat}$ désignant le courant de la batterie 11,
- $I_{sc}$ désignant le courant du ou des SC 12,
- $V_{bat}$ désignant la tension de la batterie 11,
- $V_{sc}$ désignant la tension du ou des SC 12,
- $R_{bat}$ désignant La résistance série de la batterie 11 (cf. figure 3),
- $R_{sc}$ désignant la résistance série des SC 12 (cf. figure 3),
- $V_c$ désignant la tension aux bornes du condensateur Csc du modèle des SC(cf. figure 3),
- $V_{ocv}$ désignant la tension à vide de la batterie (cf. figure 3).

En utilisant les équations (9), (12), (13), (14) et (15), on obtient l'équation (18)[9] :

$$\dot{SOC}_{sc} = -\frac{SOC_{sc} * Vsc_{sc\,max} - \sqrt{(SOC_{sc} * Vsc_{max})^2 - 4 * R_{sc} * (P_{charge} - P_{bat})}}{2 * R_{sc} * C_{sc}} \qquad (18)$$

En utilisant les équations (16), (17) et (11), on obtient l'équation (19)[9] :

$$\dot{SOC}_{bat} = -\frac{V_{ocv} - \sqrt{V_{ocv}^2 - 4 * R_{bat} * P_{bat}}}{2 * R_{bat} * C_{bat}} \qquad (19)$$

La fonction coût J à minimiser est la suivante :

$$J = min \sum_{i=1}^{Np} \left[ w_1(SOC_{sc}(k + i|k) - SOC_{sc\,ref})^2 + w_2(P_{bat}(k + i|k))^2 \right] \qquad (20)$$

On cherchera donc à asservir l'état de charge des supercondensateurs en minimisant l'écart entre le $SOC_{sc\,estimé}$ (c'est-à-dire l'état de charge des SC estimé à partir de la mesure et du modèle de la source hybride) et le $SOC_{sc\,ref}$ de référence (c'est-à-dire l'état de charge de référence des SC 12). On cherchera également à pénaliser la puissance de la batterie. En effet, on souhaite que la batterie soit sollicitée au minimum lors du fonctionnement de la source hybride. Les poids $w_1$ et $w_2$ sont définis de telle manière à mettre l'emphase sur un objectif plutôt qu'un autre. Étant donnés les ordres de grandeurs différents entre l'état de charge des SC 12 (ordre de grandeur de 1) et la puissance de la batterie 11 (ordre de grandeur compris entre 1kW et 10kW), c'est-à-dire le $SOC_{sc}$ et $P_{bat}$, il est nécessaire de normaliser la fonction coût grâce aux poids $w_1$ et $w_2$, afin que chaque terme ait une action significative. Nous ferons le choix de normaliser la fonction objectif J autour de 1 et seul le poids $w_2$ doit être modifié, de manière que :

$$w_2 = \frac{w_{2b}}{P_{charge\,max}^2} \qquad (21)$$

avec :

- $P_{charge\,max}$ désignant la puissance maximale demandée par la charge, et
- $w_{2b}$ désignant le poids à régler.

La valeur des poids de la fonction coût J peut ensuite être affinée. En augmentant wi, la variation de la tension des SC 12 est réduite autour de sa tension référence. Plus la valeur de $w_{2b}$ est grande, plus la puissance de la batterie est minimisée. Les contraintes du système sont définies de manière que :

$$Pb_{min} < P_{bat} < Pb_{max} \qquad (22)$$

$$SOC_{sc\,min} < SOC_{min} < SOC_{sc\,max} \qquad (23)$$

$$SOC_{bat\,min} < SOC_{bat} < SOC_{bat\,max} \qquad (24)$$

avec :

- J désignant la fonction coût (ou la fonction objectif), et
- $N_p$ désignant l'horizon de prédiction, et
- $w_1$ et $w_2$ les poids de la fonction coût.
- $SOC_{sc\,ref}$ désignant l'état de charge de référence du ou des SC 12,
- (k + ilk) correspond à la valeur prédite de la variable à laquelle cet indice est accolé
- $P_{bmin}$ et $P_{bmax}$, les limites minimales et maximales de la puissance de la batterie 11,
- $SOC_{sc\,min}$ et $SOC_{sc\,max}$, les limites minimales et maximales du SOC des SC 12,

- - $SOC_{sc\ min}$ et $SOC_{sc\ max}$, les limites minimales et maximales du SOC de la batterie 11.

Dans le cadre du pilotage B2) du dispositif hybride de stockage d'énergie 1, $P_{bat}$ est la variable de contrôle et $P_v$ peut être assimilée comme une perturbation. On définira les contraintes du SOC des SC entre 1 et 0,5, qui correspond d'après l'équation (9) à l'utilisation de 75% de l'énergie des SC. Le SOC de la batterie est quant à lui défini de telle manière à avoir une profondeur de décharge DOD de 80% (DOD étant l'acronyme en langue anglaise pour « *Depth of Discharge* »). La variation de $SOC_{bat}$ a été fixée de manière arbitraire entre 0,9 et 0,1. Le logiciel acaods a été utilisé pour la résolution du MPC. Le passage du NMPC à la boucle interne BI nécessite de diviser la puissance de la batterie par sa tension afin d'obtenir $I_{bat}$. Le schéma complet de la commande peut être retrouvé à la Figure 4.

La figure 5 montre que l'algorithme de l'étape B2 est séparé en deux parties comprenant :

- une première partie consistant en la boucle interne BI pour piloter le courant du super condensateur 12, et
- une deuxième partie consistant en la boucle externe BE constituée de ladite commande prédictive NMPC2.

Plus particulièrement, ces deux boucles (interne BI et externe BE) sont en cascade permettent de réaliser la commande du convertisseur 13 :

- la boucle interne (inspirée par les travaux de Nguyen[8]) consiste en un correcteur Proportionnel Intégral (ou correcteur PI) qui a pour rôle s'asservir le courant d'entrée du convertisseur 12, c'est-à-dire le courant des supercondensateurs 12 (boucle interne) ;
- la boucle externe (inspirée par les travaux de Golchoubian[9]) plus lente que la boucle interne, a pour rôle la gestion et le partage d'énergie entre les deux systèmes de stockage (batterie et SC) et la charge.

Une consigne de courant sera ainsi calculée par la boucle externe et envoyée en entrée de la boucle interne afin de piloter le convertisseur 13 comme illustré sur la figure 5.

Le procédé selon l'invention permet donc d'améliorer le partage de puissance entre la batterie 11 et le supercondensateur 12 par rapport aux algorithmes à base de règles. Il permet de disposer de meilleurs indicateur de vieillissement et de mieux gérer les contraintes sur la batterie ainsi que les limites critiques de la batterie et des SC (notamment en termes de surcharge et de décharges).

## RÉFÉRENCES

1. R. E. Araujo, R. De Castro, C. Pinto, P. Melo, and D. Freitas, "Combined sizing and energy management in evs with batteries and supercapacitors" IEEE Transactions on Vehicular Technology, vol. 63, no. 7, pp. 3062-3076, 2014.

2. L. Zhang, X. Hu, Z. Wang, F. Sun, J. Deng and D. G. Dorrell, "Multiobjective Optimal Sizing of Hybrid Energy Storage System for Electric Vehicles" in IEEE Transactions on Vehicular Technology, vol. 67, no. 2, pp. 1027-1035, Feb. 2018,

3. J. M. Gonzalez-Gonzalez, S. Martin, P. Lopez, and J. A. Aguado, "Hybrid battery-ultracapacitor storage system sizing for renewable energy network intégration," IET Renewable Power Génération, vol. 14, pp. 2367{2375, oct 2020.

4. A. Ostadi and M. Kazerani, "A comparative analysis of optimal sizing of battery-only, ultracapacitor-only, and battery-ultracapacitor hybrid energy storage systems for a city bus" IEEE Transactions on Vehicular Technology, vol. 64, pp. 4449{4460, oct 2015.

5. V. Herrera, A. Milo, H. Gaztanaga, I. Etxeberria-otadui, and I. Villarreal, "Adaptive energy management strategy and optimal sizing applied on a battery-supercapacitor based tramway," Applied Energy, vol. 169, pp. 831-845, 2016

6. Rui Xiong, Hongwen He, Fengchun Sun "Methodologyfor Optimal Sizing of Hybrid Power System Using particle Swarm Optimization andDynamic Programming" Energy Procedia, vol. 75, pp. 1895-1900, 2015.

7. S. Trieste, S. Hmam, J. C. Olivier, S. Bourguet, and L. Loron, "Techno-economic optimization of a supercapacitor-based energy storage unit chain: Application on the first quick charge plug-in ferry" Applied Energy, vol. 153, pp. 3-14, sep 2015.

8. H. Nguyen, R. German, J. P. F. Trovào and A. Bouscayrol, "Real-Time Energy Management of Battery/Supercapacitor Electric Vehicles Based on an Adaptation ofPontryagin's Minimum Principle" in IEEE Transactions on Vehicular Technology, vol. 68, no. 1, pp. 203-212, Jan. 2019, doi: 10.1109/TVT.2018.2881057

9. P. Golchoubian, N. L. Azad, and K. Ponnambalam, "Stochastic Nonlinear Model Predictive Control of Battery-Supercapacitor Hybrid Energy Storage Systems in Electric Vehicles", vol. 9545, no. c, pp. 1{12, 2017.

**Revendications**

1. Procédé de gestion d'énergie d'un dispositif hybride de stockage d'énergie (1) dans un système stationnaire ou mobile, ledit dispositif hybride de stockage d'énergie (1) comprenant au moins une source d'énergie principale (11), au moins une source d'énergie auxiliaire (12), et au moins un convertisseur (13),
ledit procédé comprenant les étapes suivantes :

   - A) une première étape de dimensionnement comprenant

      A1) l'acquisition des paramètres d'entrée suivants : cycles de puissance dudit système, et la technologie des sources d'énergie principale (11) et auxiliaire (12) dudit dispositif hybride de stockage d'énergie, puis
      A2) la mise en place d'une stratégie de gestion de l'énergie à l'aide d'une première commande prédictive MPC1 pour obtenir les données de sortie suivantes : les données de dimensionnement de ladite au moins une source d'énergie principale (11) et de ladite au moins une source d'énergie auxiliaire (12) nécessaires et des informations relatives audit au moins un convertisseur (13) ;

   - B) une deuxième étape de test en simulation de la cohérence des données de sorties obtenues à l'étape A) comprenant les sous-étapes suivantes :

      B1) modélisation d'une part de ladite au moins source d'énergie principale (11) et d'autre part de ladite au moins une source d'énergie auxiliaire (12) ainsi que dudit au moins un convertisseur de puissance (13) servant d'interface entre lesdites sources principale et auxiliaire d'énergie (11, 12) ;
      B2) pilotage dudit dispositif hybride de stockage d'énergie (1) à l'aide d'un algorithme comprenant une boucle de gestion d'énergie constituée d'une deuxième commande prédictive NMPC2.

2. Procédé selon la revendication 1, dans lequel l'algorithme de l'étape B2) est séparé en deux parties comprenant :

   - une première partie consistant en une boucle interne (BI) pour piloter la puissance la source auxiliaire d'énergie (12), et
   - une deuxième partie consistant en une boucle externe (BE) constituée de ladite commande prédictive NMPC2.

3. Procédé selon l'une quelconque des revendications 1 et 2, comprenant en outre une troisième étape optionnelle C) de test de l'algorithme de l'étape B2 sur un système réel.

4. Procédé selon l'une quelconque des revendications 1 à 3, dans lequel chacune des sources d'énergie principale (11) et auxiliaire (12) étant choisie dans le groupe constitué des sources d'énergie suivantes : batteries, piles à combustible, supercondensateurs et volants d'inertie.

5. Procédé selon la revendication 4, dans lequel la source d'énergie principale (11) est une batterie, et de préférence une batterie choisie dans le groupe constitué des batteries Li-ion, batteries sodium, batteries Li-air et des batteries Li-solide.

6. Procédé selon la revendication 5, dans lequel la source d'énergie principale (11) est une batterie Li-ion et la source d'énergie auxiliaire (12) est un supercondensateur.

7. Procédé selon l'une quelconque des revendications 1 à 6, dans lequel des itérations successives peuvent être réalisées entre les étapes A) et B).

8. Procédé selon l'une quelconque des revendications 3 à 6, dans lequel des itérations successives peuvent être réalisées entre les étapes B) et C).

9. Utilisation du procédé telle que défini selon l'une quelconque des revendications 1 à 8 dans le domaine de la mobilité électrique.

10. Utilisation du procédé telle que défini selon l'une quelconque des revendications 1 à 8 dans le domaine des applications stationnaires, pour la gestion d'énergie d'un dispositif hybride de stockage d'énergie (1) dans un système stationnaire.

EP 4 498 562 A1

Fig. 1

Fig. 2

12

Fig. 3

Fig. 4

Fig. 5

Europäisches Patentamt
European Patent Office
Office européen des brevets

# RAPPORT DE RECHERCHE EUROPEENNE

Numéro de la demande

EP 23 20 2444

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| A | US 2018/154779 A1 (CHOL SAEMIN [US] ET AL) 7 juin 2018 (2018-06-07) * abrégé * * revendications 1,10 * * figures 1,2,5,6 * * alinéas [0011], [0032], [0033], [0049] – [0052], [0055] – [0086] * * tableaux 1,2 * ----- | 1-10 | INV. H02J7/00 B60L50/40 H02J7/34 |
| A | CN 115 133 636 A (CHANGSHA SPACETY SPACE SCIENCE AND TECH RESEARCH INSTITUTE CO LTD) 30 septembre 2022 (2022-09-30) * abrégé * * alinéas [0011] – [0044] * * revendications 1,6 * * figure 1 * ----- -/-- | 1-10 | |

DOMAINES TECHNIQUES RECHERCHES (IPC)

H02J
B60L

Le présent rapport a été établi pour toutes les revendications

| Lieu de la recherche | Date d'achèvement de la recherche | Examinateur |
|---|---|---|
| Munich | 5 avril 2024 | Fiat, Cyrille |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)

page 1 de 2

Europäisches
Patentamt

European
Patent Office

Office européen
des brevets

**RAPPORT DE RECHERCHE EUROPEENNE**

Numéro de la demande

**EP 23 20 2444**

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| A | LU XIAOYING ET AL:  "Optimal Sizing and Energy Management for Cost-Effective PEV Hybrid Energy Storage Systems", IEEE TRANSACTIONS ON INDUSTRIAL INFORMATICS, IEEE SERVICE CENTER, NEW YORK, NY, US, vol. 16, no. 5, 3 décembre 2019 (2019-12-03), pages 3407-3416, XP011773622, ISSN: 1551-3203, DOI: 10.1109/TII.2019.2957297 [extrait le 2020-02-13] * le document en entier * * abrégé * * figures 2,4,8 * * tableaux 2,3,4 * * page 3408 * * "A- Battery modeling";"B- UC modeling"; page 3410 * * page 3411 * * page 3413 * * "VII. Results and discussion; A. Sizing Optimization Results and Simulation Validation"; page 3412 *  ----- | 1-10 | |

DOMAINES TECHNIQUES RECHERCHES (IPC)

Le présent rapport a été établi pour toutes les revendications

| Lieu de la recherche | Date d'achèvement de la recherche | Examinateur |
|---|---|---|
| Munich | 5 avril 2024 | Fiat, Cyrille |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
& : membre de la même famille, document correspondant

EPO FORM 1503 03.82 (P04C02)

## ANNEXE AU RAPPORT DE RECHERCHE EUROPEENNE
## RELATIF A LA DEMANDE DE BREVET EUROPEEN NO.

EP 23 20 2444

La présente annexe indique les membres de la famille de brevets relatifs aux documents  brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

05-04-2024

| Document brevet cité au rapport de recherche | Date de publication | Membre(s) de la famille de brevet(s) | Date de publication |
|---|---|---|---|
| US 2018154779 A1 | 07-06-2018 | CN 108012538 A | 08-05-2018 |
| | | EP 3292018 A2 | 14-03-2018 |
| | | US 2018154779 A1 | 07-06-2018 |
| | | WO 2016209378 A2 | 29-12-2016 |
| CN 115133636 A | 30-09-2022 | AUCUN | |

Pour tout renseignement concernant cette annexe : voir Journal Officiel de l'Office européen des brevets, No.12/82

EPO FORM P0460

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **R. E. ARAUJO** ; **R. DE CASTRO** ; **C. PINTO** ; **P. MELO** ; **D. FREITAS**. Combined sizing and energy management in evs with batteries and supercapacitors. *IEEE Transactions on Vehicular Technology*, 2014, vol. 63 (7), 3062-3076
- **L. ZHANG** ; **X. HU** ; **Z. WANG** ; **F. SUN** ; **J. DENG** ; **D. G. DORRELL**. Multiobjective Optimal Sizing of Hybrid Energy Storage System for Electric Vehicles. *IEEE Transactions on Vehicular Technology*, February 2018, vol. 67 (2), 1027-1035
- **J. M. GONZALEZ-GONZALEZ** ; **S. MARTIN** ; **P. LOPEZ** ; **J. A. AGUADO**. Hybrid battery-ultracapacitor storage system sizing for renewable energy network intégration. *IET Renewable Power Génération*, October 2020, vol. 14, 2367-2375
- **A. OSTADI** ; **M. KAZERANI**. A comparative analysis of optimal sizing of battery-only, ultracapacitor-only, and battery-ultracapacitor hybrid energy storage systems for a city bus. *IEEE Transactions on Vehicular Technology*, October 2015, vol. 64
- **V. HERRERA** ; **A. MILO** ; **H. GAZTANAGA** ; **I. ETXEBERRIA-OTADUI** ; **I. VILLARREAL**. Adaptive energy management strategy and optimal sizing applied on a battery-supercapacitor based tramway. *Applied Energy*, 2016, vol. 169, 831-845
- **RUI XIONG** ; **HONGWEN HE** ; **FENGCHUN SUN**. Methodologyfor Optimal Sizing of Hybrid Power System Using particle Swarm Optimization andDynamic Programming. *Energy Procedia*, 2015, vol. 75, 1895-1900
- **S. TRIESTE** ; **S. HMAM** ; **J. C. OLIVIER** ; **S. BOURGUET** ; **L. LORON**. Techno-economic optimization of a supercapacitor-based energy storage unit chain: Application on the first quick charge plug-in ferry. *Applied Energy*, September 2015, vol. 153, 3-14
- **H. NGUYEN** ; **R. GERMAN** ; **J. P. F. TROVÀO** ; **A. BOUSCAYROL**. Real-Time Energy Management of Battery/Supercapacitor Electric Vehicles Based on an Adaptation ofPontryagin's Minimum Principle. *IEEE Transactions on Vehicular Technology*, January 2019, vol. 68 (1), 203-212
- **P. GOLCHOUBIAN** ; **N. L. AZAD** ; **K. PONNAMBA-LAM**. *Stochastic Nonlinear Model Predictive Control of Battery-Supercapacitor Hybrid Energy Storage Systems in Electric Vehicles*, 2017, vol. 9545 (c), 1-12